(19) Europäisches Patentamt / European Patent Office / Office européen des brevets

(11) **EP 3 300 435 B1**

(12) **EUROPEAN PATENT SPECIFICATION**

(45) Date of publication and mention
of the grant of the patent:
**08.04.2020 Bulletin 2020/15**

(51) Int Cl.:
***H04W 52/02*** *(2009.01)*

(21) Application number: **16190778.7**

(22) Date of filing: **27.09.2016**

(54) **COMMUNICATION DEVICE AND METHOD FOR RESUMING DATA RECEPTION**

KOMMUNIKATIONSVORRICHTUNG UND VERFAHREN ZUR ZUSAMMENFASSUNG VON DATENEMPFANG

DISPOSITIF DE COMMUNICATION ET PROCEDE DE REPRISE DE RECEPTION DE DONNEES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.03.2018 Bulletin 2018/13**

(73) Proprietor: **Intel IP Corporation
Santa Clara, CA 95054 (US)**

(72) Inventors:
• **HWANG, Yeong-Sun Yongsun
82041 Oberhaching (DE)**
• **KIM, Jee Hyun
82008 Unterhaching (DE)**

(74) Representative: **Lang, Johannes et al
Bardehle Pagenberg Partnerschaft mbB
Patentanwälte, Rechtsanwälte
Prinzregentenplatz 7
81675 München (DE)**

(56) References cited:
**US-A1- 2014 341 326     US-A1- 2016 007 292**

## Description

## Technical Field

Embodiments described herein generally relate to communication devices and methods for resuming data reception.

## Background

The reception of radio signals by a mobile communication terminal, e.g. a mobile phone, may be interrupted for various reasons, e.g. for measurements, discontinuous reception etc. During such periods, a receiver may be switched off to save power. However, after the interruption, parameters like gain and time and frequency offsets need again to be set. Accordingly, efficient approaches to set or determine such parameters are desirable. US 2016/0007292 A1 discloses a wireless communication system that adaptively determines a wakeup period.

## Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1 shows a communication system, e.g. an LTE (Long Term Evolution) communication system.
Figure 2 shows a frame in accordance with an embodiment.
Figure 3 illustrates a default mode for gain acquisition by 3-step-AGC and IRX-assisted time/frequency tracking.
Figure 4 illustrates an alternative mode in which initial gain and time/frequency offset setting is performed on the latest available values.
Figure 5 shows an exemplary block diagram of a receive section of a mobile communication device which employs a regression-based AGC initial gain setting scheme.
Figure 6 shows a diagram giving an example for the dependency of received power of a mobile from the distance to the base station.
Figure 7 shows a diagram giving an example for the dependency of received power of a mobile from the distance to the base station according to path loss.
Figure 8A shows an example of a mobile station located in a car moving with respect to a base station.
Figure 8B shows a diagram showing a transmitter-receiver distance estimate based on the travel distance of a mobile station with respect to the transmitter and its precision.
Figure 9A illustrates a typical operation scenario and its handling according to one example.
Figure 9B shows a corresponding diagram indicating the reception power at the mobile station.
Figure 10 shows a flowchart that illustrates a regression-based AGC gain setting method.
Figure 11 shows a flowchart illustrating initial gain and time/frequency tracking decisions according to an example.
Figure 12 shows an example of a Gain backoff function.
Figure 13 shows a diagram showing the relative occurrence rate of gain changes over different time windows in a highway scenario.
Figure 14 illustrates an interaction between mobile station subcomponents according to an exemplary approach.
Figure 15 shows a communication device according to various examples.
Figure 16 shows a method for resuming data reception according to various examples.

## Description of Embodiments

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects. Embodiments of the invention are carried out according to the accompanying independent claims.

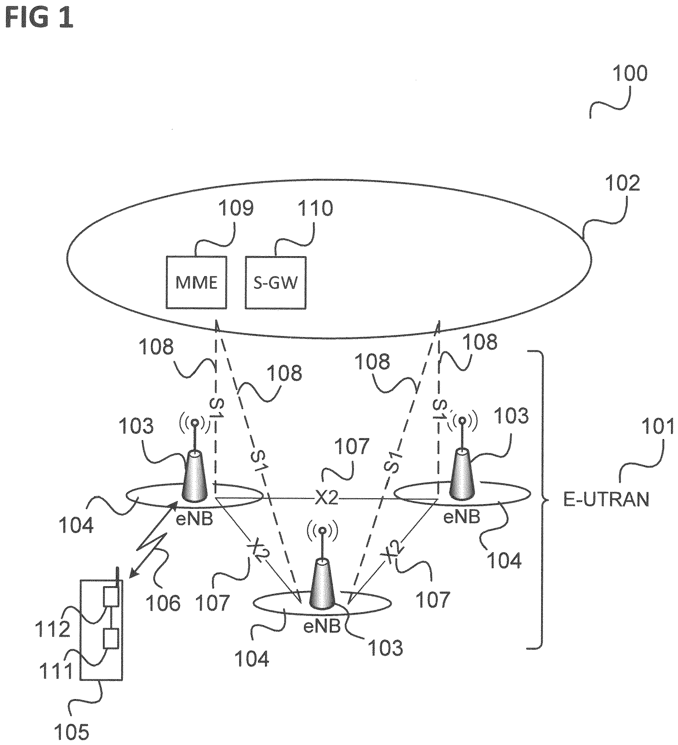

Figure 1 shows a communication system 100, e.g. an LTE (Long Term Evolution) communication system.

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in one of the mobile radio cells 104 (in this example the leftmost radio cell 104) may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109, and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

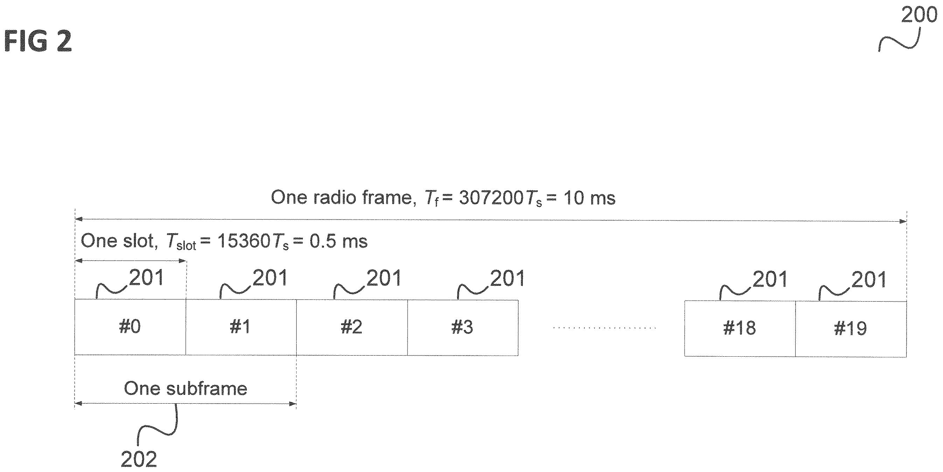

Data transmission between the mobile terminal 105 and the corresponding base station 103 (i.e. the base station operating the radio cell in which the mobile terminal 105 is located) is carried out in accordance with a (radio) frame structure. An example for a frame structure, denoted as frame structure type 1, is shown in Figure 2.

Figure 2 shows a frame 200 in accordance with an embodiment.

The LTE frame 200 is 10ms long and consists of 20 slots 201 of length 0.5ms, numbered from 0 to 19. A subframe 202 is defined as two consecutive slots 201. In each 10ms interval 10 subframes 202 are available for downlink transmissions or uplink transmissions. Uplink and downlink transmissions are separated in the frequency domain (FDD) or time domain (TDD). Depending on the slot format a subframe 202 may include 14 or 12 OFDMA (orthogonal frequency division multiple access) symbols in DL (downlink) and 14 or 12 SC-FDMA symbols in UL (uplink), respectively.

The radio access network 101 and the core network may support communication according to various communication technologies, e.g. mobile communication standards. For example, each base station 103 may provide a radio communication connection via the air interface between itself and the mobile terminal 105 according to LTE, UMTS, GSM (Global System for Mobile Communications), GPRS (General Packet Radio Service), EDGE (Enhanced Data Rates for GSM Evolution) radio access. Accordingly, the radio access network 102 may operate as an E-UTRAN, a UTRAN, a GSM radio access network, or a GERAN (GSM EDGE Radio Access Network). Analogously, the core network 102 may include the functionality of an EPC, a UMTS core network or a GSM core network. The approaches described herein may also be applied to future RAT technologies such as 5G.

For uplink radio communication via the air interface 106, the mobile terminal 105 includes a modem 111 which may for example make use of a receiver 112 for reception of signals from its serving base station 103.

A cellular modem 111 as used in a 3GPP Long Term Evolution (LTE) communication system may face frequent disruptions of reception, for example due to usage of DRX (discontinues reception), a VoLTE service, or a power saving mode, where the modem 111 engages in a sleep mode (for example corresponding a period of inactivity of the receiver 112). The modem 111 cannot estimate the received signal strength and time and frequency offset (of signals sent by its serving base station 103) during the period of inactivity of the receiver, i.e. during the time period from RX_OFF (receiver 112 is switched off) till RX_ON (receiver 112 is switched on), hereafter denoted as sleep time. A potential cause for reception performance degradation arises in the time period immediately after the sleep, where the most recent receiver gain states and time and frequency offset estimates may be a few milliseconds to a few seconds old and may not sufficiently reflect the current values.

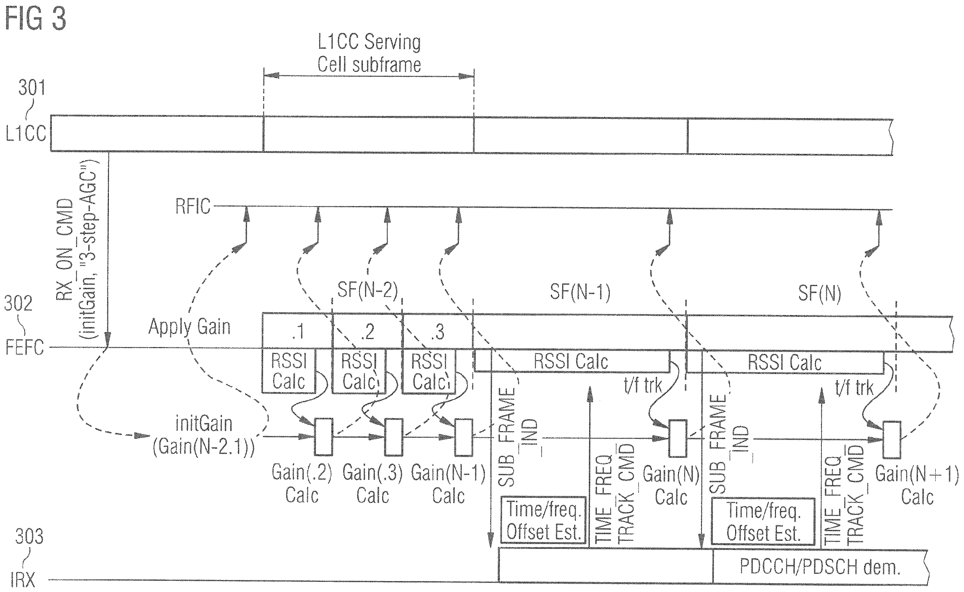

Figure 3 illustrates a default mode for gain acquisition by 3-step-AGC and IRX-assisted time/frequency tracking.

Time flows from left to right and the actions of modem components 301, 302, 302 are illustrated.

In this approach, a L1CC (Layer 1 Control Component) 301 of the modem 111 commands a FEFC (Front End and FFT Component) 302 of the modem 111 to perform 3-step-AGC (Automatic Gain Control) at least two subframes earlier than the actual subframe of interest (denoted as SF(N)), i.e. the subframe when the modem should be available, i.e. no longer sleep, and in particular the receiver 112 is active again, e.g. to continue a communication. This 3-step-AGC is specially designed for gain acquisition by measuring signal strength (RSSI), and determining/applying the gain for the next three times within one subframe (in SF(N-2)), in an effort to accelerate time to get a stable gain compared to the connected mode AGC which is performed per subframe basis (the whole subframe duration of 1ms is used for RSSI measurement and corresponding gain setting for the next upcoming subframe). In case of the connected mode AGC, the maximum gain step is typically set to be 3dB with 3 dB gain step granularity, meaning that only the following delta gain value can be requested/applied for the next data stream, i.e., {+3, 0, -3}dB, with respect to the current gain in order not to introduce abrupt big gain changes which might be harmful for other subsequent LTE L1 subcomponents, e.g., IRX (Inner Receiver) 303 for its channel estimation operation. Unlike the connected mode AGC, 3-step-AGC allows higher maximum gain step, e.g., 18dB, with 3 dB gain granularity, hence the possible gain delta values are {+18, +15,..., 0,..., -15, - 18}dB. As 3-step-AGC updates a gain 3 times per subframe, the gain can be adjusted up to 54dB (18dB/update * 3updates/sf = 54dB/sf) within one subframe (of length 1ms). However, due to a more frequent and dynamic gain change, these samples of 1ms length cannot be used for time/frequency offset estimation at IRX 303. This restriction leads to one subsequent subframe (SF(N-1)) being dedicated for time/frequency offset estimation at IRX 303. This default mode guarantees an appropriate gain/time/frequency tracking by the time of reception of SF(N), but it requires RFIC (radio frequency integrated circuit), e.g. corresponding to receiver 112, (and FEFC 302) to be woken up two subframes earlier, which leads to higher power consumption.

The default mode as illustrated in figure 3 therefore gives rise to two issues:

[P1] Default Mode: increased power consumption due to 2 subframes lead-time
[P2] Default Mode: not always applicable due to high computational power (MIPS) requirements

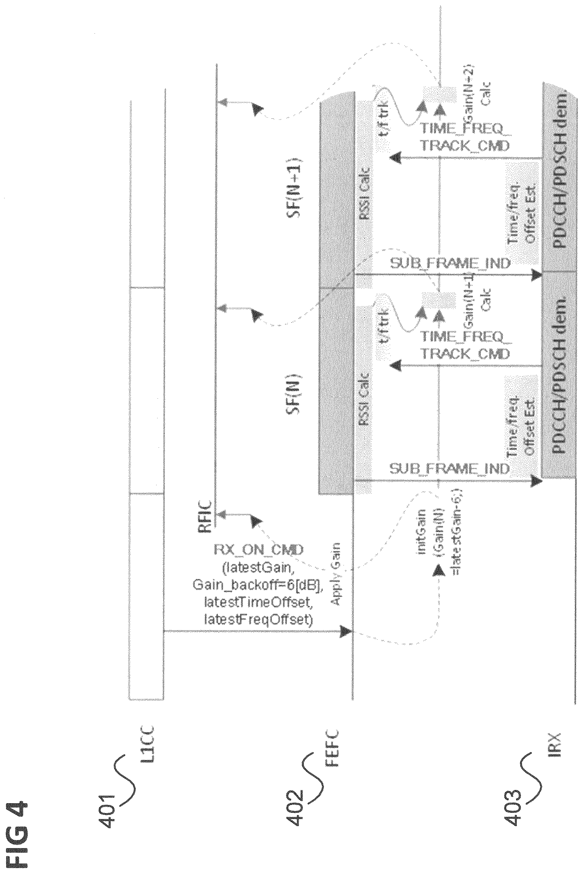

There are cases in which the default mode cannot be executed (due to high MIPS requirements of 3-step-AGC), e.g., 3 DL (Downlink) CA (Carrier Aggregation), DBB (Digital Base Band) being under lower system clock, etc. In this case, an alternative mode as illustrated in figure 4 can be used.

Figure 4 illustrates an alternative mode in which initial gain and time/frequency offset setting is performed on the latest available values.

As in figure 3, time flows from left to right and the actions of modem components 301, 302, 302 are illustrated.

In the alternative mode of figure 4, the initial gain is set as latest available gain (i.e. gain used before entering sleep mode, i.e. at the time of the RX_OFF event) - gain backoff to avoid clipping just in case and the initial time/frequency tracking values are set as the latest available time/frequency values. The gain backoff is typically fixed to be 6dB. This alternative mode can be more efficient than the default mode as it does not mandate two subframe lead-time. However, the following issues can be observed:

[P3] Alternative Mode: 6 [dB] gain backoff leads to prolonged gain settle-down time in case of short sleep time.
[P4] Alternative Mode: time/frequency estimation at SF(N) requests rather high time/ frequency offset correction (might lead to lower performance as a result) as the latest time/ frequency values become outdated in case of long sleep time.
[P5] Alternative Mode: in case of high mobility scenario (highway or high speed train), a higher adaptivity to the signal strength change is required, rather than simply resorting to the predefined fixed value of gain backoff.

According to exemplary approaches described in the following, the issues P1 to P5 of the approaches of figures 3 and 4 are addressed by introducing a channel parameter (gain, time and frequency offset) prediction and validity check mechanism. For example, a regression-based signal strength prediction scheme based on the elapsed time (referred to as sleep time) from the RX_OFF event is used to determine the gain at the initial samples after wake-up (i.e. after the RX_ON event) and to check validity of the latest time/frequency offset. For example, an approach may be based on the principle that the longer the sleep time is, the more likely the latest channel parameter values become outdated.

According to one example, an after-sleep AGC gain adjustment procedure utilizes regression on selected channel parameters, e.g. Doppler spread and received signal strength, to predict the received signal strength upon wake-up. The regression considers path loss and shadow fading.

By introducing a channel parameter prediction and validity check mechanism, the initial AGC and time/frequency tracking schemes can be flexibly configured such that it can command efficient usage of resource by removing two subframe lead-time for power saving (which can be seen to address issue [P1]) and by adaptively estimating the initial gain at wake-up for reduced gain settlement time (which can be seen to address issue [P3]) with targeted gain setting by regression-based signal strength prediction scheme (which can be seen to address issue [P5]), while it can achieve good trade-off between a reduced lead-time required for IRX-assisted time/frequency tracking and a reliable first-shot time/frequency tracking based on the latest available values (which can be seen to address issue [P4]). Moreover, the proposed scheme can be used with lower system clock as its MIPS requirements is not so high as the Default Mode of the current implementation (which can be seen to address issue [P2]).

The Default Mode illustrated in figure 3 may provide sufficient adjustment but may be inefficient, since the associated (2 subframe) lead time overhead may be unnecessarily long. The Alternative Mode of illustrated in figure 4 is more efficient due to removal of 2 subframe lead-time but might be vulnerable in case of long sleep time. Its fixed back-off gain of 6 dB may provide an acceptable rule-of-thumb margin for a range of discontinuous reception scenarios, but such a fixed margin may not be sufficient in all cases, especially when the sleep duration is significantly shorter or longer than the expected mean sleep duration. As an example, it can been observed that such fixed backoff combined with a short sleep can lead to excessively long gain-settlement time. On the other hand, in case of a high mobility scenario (with a movement speed of the mobile terminal up to ~100 m/s), such fixed backoff may be inaccurate for a wide range of sleep length.

The approaches described in the following do not stick to one specific mode, but rather allow flexibility to cope with the situation in a better way by monitoring the elapsed time (sleep time duration) and by adaptively configuring the initial AGC and time/frequency tracking strategies based on sleep time duration. The gain at wake-up which is aligned with the expected signal strength can be selected without having to use a significant time for the initial gain acquisition nor blindly setting the gain backoff of which margin is not set with its specific use case scenario being considered.

The class of AGC gain adjustment procedures according to various examples utilizes readily available channel parameters such as Doppler spread and received signal strength to provide efficient and robust initial gain settings for a wide range of mobility scenarios.

Besides this generalized scheme, the first default parameter values and the scheme simplified accordingly are provided with methodology of how they have been acquired, which can serve as a good starting point and guiding principle. This can greatly simplify the system design and provides significant modem performance enhancement.

In the following, two examples are described. First, a more generic regression-based AGC initial gain setting scheme is described, then a simpler embodiment using an absolute time metric is provided. The configuration of the initial time/frequency tracking scheme at wake-up is independent of the two examples and is explained later.

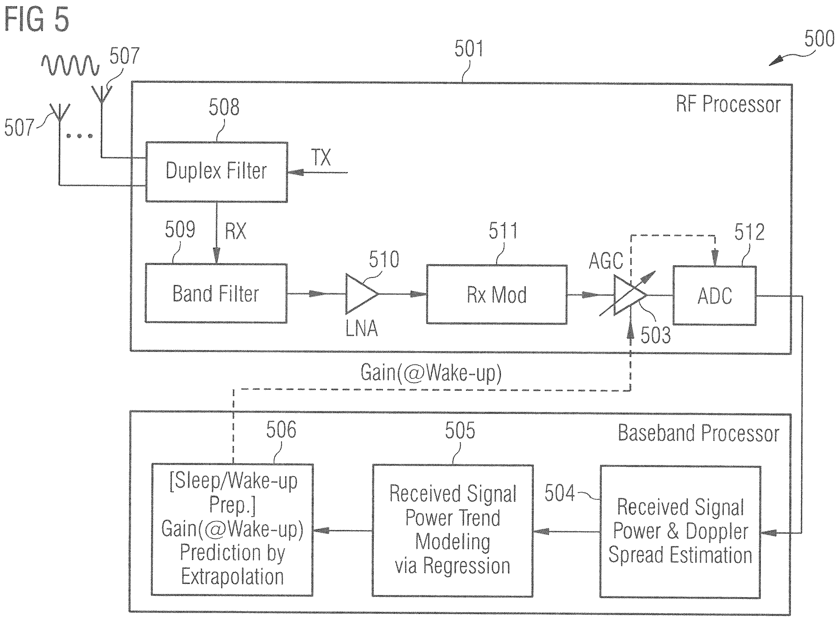

Figure 5 shows an exemplary block diagram of a receive section 500 of a mobile communication device which employs a regression-based AGC initial gain setting scheme.

The receive section 500 comprises an RF (radio frequency) processor 501, for example included in receiver 112, and a baseband processor 502, for example included in modem 111.

In order to set the gain at the time of wake-up to be applied at an AGC unit 503 in the RF processor 501, the baseband processor 502 predicts the received signal strength after sleep time (block 504), by acquiring the trend of the signal strength via a regression based on the collected signal strengths and Doppler spread estimates (block 505) and by extrapolation (block 506). The baseband processor 502 for example performs this based on a path loss and shadow fading model for modeling of the received signal strength trend (explained in more detail below).

The baseband processor 502 operates on the output of the RF processor 501. The RF processor receives a radio signal from a plurality of antennas 507 which is provided via a duplex filter 508 to a band filter 509 whose output is amplified by a low noise amplifier 510 and then demodulated by a demodulator 511 whose output is supplied to the AGC unit 503. The output of the AGC unit 503 is supplied to an analog-to-digital converter 512 whose output is the output of the RF processor 501. The set point of the ADC unit 512 is configured by the AGC unit 503, which is controlled by the corresponding baseband processor 502.

It should be noted that the approach of figure 5 allows providing a technically sound scheme with reasonable computational complexity which is based on linear regression method to predict the future received signal strength at wake-up, requiring only readily available channel parameters at modem, e.g., Doppler spread estimate, and the received signal strength.

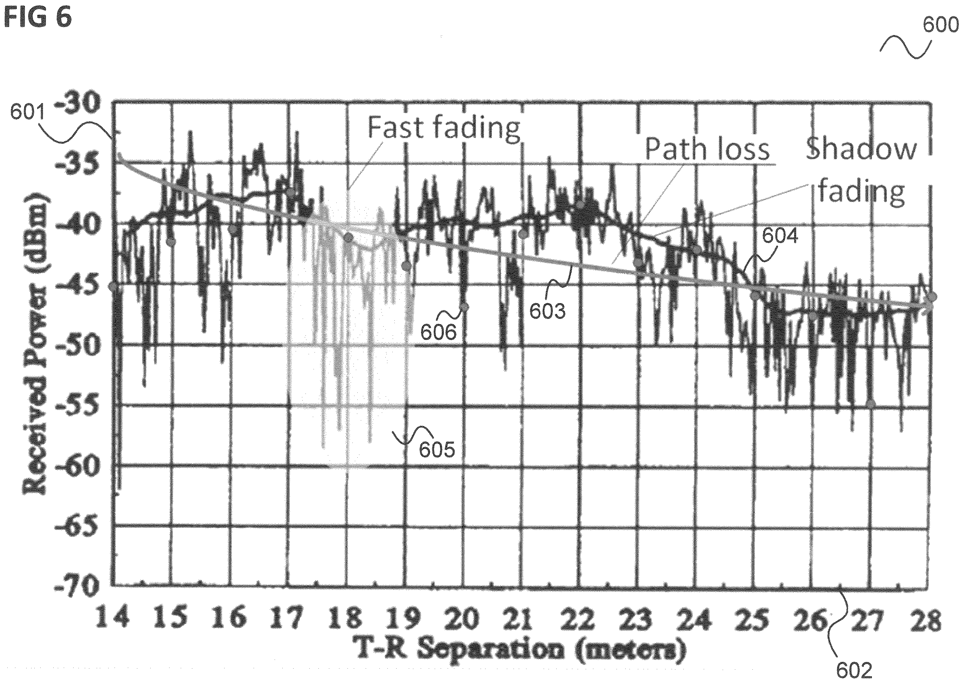

In the following, some theoretical background is given. Basically, the AGC at the mobile station (MS) or mobile terminal 105 needs to be designed to cope with the slow fading of the downlink channel (as opposed to the fast fading). The channel fading seen by the moving MS can be characterized as in figure 6.

Figure 6 shows a diagram 600 giving an example for the dependency of received power of a mobile (increasing from bottom to top along vertical axis 601) from the distance to the base station (increasing from left to right along horizontal axis 602).

Path loss is a transmitter-receiver (Tx-Rx) distance dependent mean attenuation of the signal (first curve 603), shadow fading models variations in path loss due to large obstacles like buildings, terrain conditions, trees, etc. (second curve 604), and fast fading, also denoted as multi-path fading, which is caused by multiple path reflections of transmitted waves by local scatters like human built structures or small natural obstacles (shaded area 605). The primary goal of the AGC gain setting is to track/cope with the received signal power in which path loss and shadow facing is reflected. As can be seen in figure 6, there is a certain relationship between path loss and Tx-Rx separation. Therefore, it might be desirable if a MS could monitor its trend (by taking into account some sampling points denoted as dots 606 in figure 6 for example), and be able to predict the future received signal strength at wake-up, in case sleep is expected.

Path loss and shadow fading can be modeled as below:

$$L = A + 10 \cdot n \cdot \log_{10}(R) \ [\text{dB}] \quad \text{(Equation 1)}$$

(Equation 1) models the outdoor path loss. Here R is the distance between Tx and Rx, and A, n are constants which are depending on parameters like carrier frequency, antenna heights, terrain characteristics (e.g., n defines the exponential attenuation of the signal, and its typical value is 3~4 for urban environment while n = 2 for free space), etc.

Shadow fading can be modeled by log-normal distribution, i.e., the received signal strength in dB (or dBm in absolute terms) is of the form:

$$L = \bar{L} + X \ [\text{dB}], \quad \text{(Equation 2)}$$

where $\bar{L}$ is the mean path loss and X is a random variable which follows the normal distribution

$$X \sim \frac{1}{\sqrt{2\pi}\sigma} e^{-\frac{x^2}{2\sigma^2}} = f(x)$$

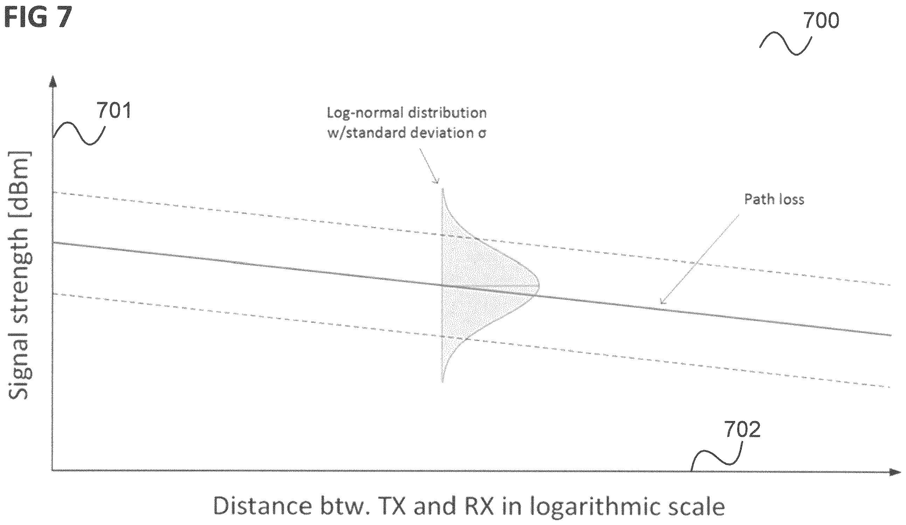

with zero mean and standard deviation $\sigma$. The slow fading (path loss and shadow fading) effect can be depicted as in figure 7.

Figure 7 shows a diagram 700 giving an example for the dependency of received power of a mobile (increasing from bottom to top along vertical axis 701) from the distance to the base station (increasing logarithmically from left to right along horizontal axis 702) according to path loss.

In should be noted that in figure 7 and (Equation 1) the path loss (hence the mean received signal strength) in dBm can be represented in a linear equation of Tx-Rx distances in logarithmic scale. Once this linear equation is acquired (A and n value) via a linear regression algorithm, the received signal power (L in Equation 2) can be estimated with a certain coverage probability ($P_{cov}$) in a deterministic manner exploiting its normal distribution. In short, SFM (shadow fading margin) for a given $P_{cov}$ and $\sigma$ can be formulated from $P_{cov} = P\{X > -SFM\}$ as:

$$SFM = \sigma \cdot Q^{-1}(1 - P_{cov}), \quad \text{(Equation 4)}$$

where $Q(x) = \frac{1}{\sqrt{}} \int^{\infty} e^{-\frac{u^2}{2}} du$. SFM SFM for the selected exemplary $P_{cov}$ values is as follows.

$$SFM = \begin{cases} 1.64 \cdot \sigma, & (P_{cov} = 0.95) \\ 1.28 \cdot \sigma, & (P_{cov} = 0.90) \\ 0.84 \cdot \sigma, & (P_{cov} = 0.80) \end{cases} \quad \text{(Equation 5)}$$

For example, when $\sigma$ = 6 [dB], 5 [dB] gain backoff with respect to the gain tuned for the (predicted) mean received signal strength may be able to cover 80 % of cases, as for $P_{cov}$ = 0.8 0.84 · 6 $\cong$ 5.04.

The main challenge of finding A and n value in (Equation 1) is typically to collect samples (regression set) of $\{(R(t_k), P_{MS}(t_k))\}$. Due to the fact logarithm has to applied to $R(t_k)$, just knowing $\Delta R$ is not enough

$$(\log(R + \Delta R) - \log(R) = \log\left(\frac{R + \Delta R}{R}\right);$$

still dependent on R); the MS needs to know the distance from the transmitter (BS). On the other hand, an estimate of R itself could be acquired via a linear regression (Equation 1) as well. Here, the initial distance between Tx and Rx is $R_0$ at t = $t_0$. Then the distance at t = $t_k$, $R(t_k)$, can be formulated as follows.

$$R(t_k) = R_0 + d(t_k) := R_0 + \sum_{i=0}^{k-1} \Delta d(t_i, t_{i+1}), \quad \text{(Equation 6)}$$

Here $d(t_k)$ is the MS's travel distance contributing to approaching to/moving away from the Tx.

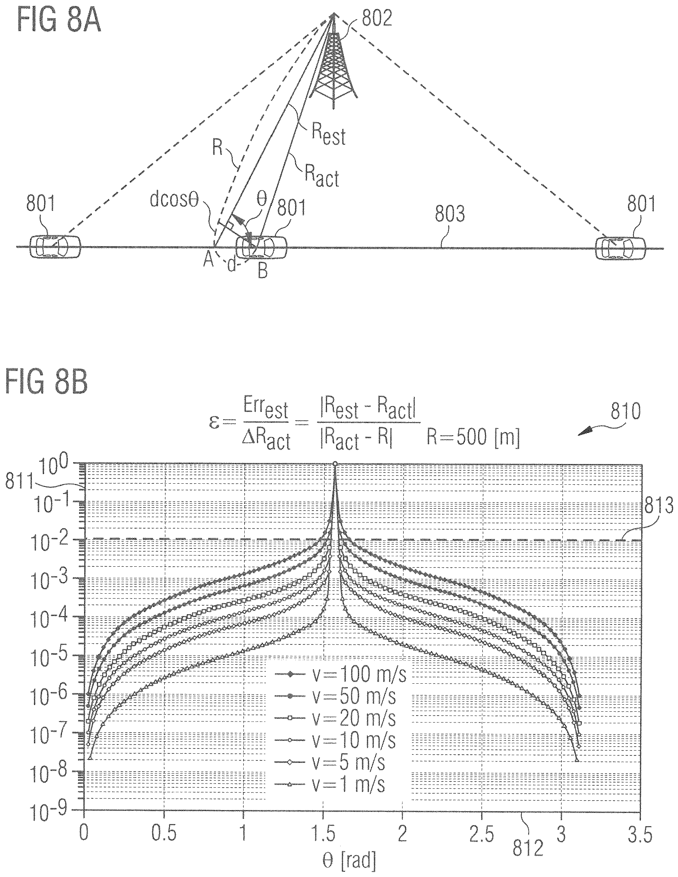

Figure 8A shows an example of a mobile station 801 located in a car moving with respect to a base station 802.

The travel distance $d(t_k)$ of (Equation 6) corresponds to d cos $\theta$ with the angle $\theta$ as indicated in figure 8A.

In the example of figure 8A, the MS 801 is assumed to travel along a straight line 803 from the left side to the right side, but it can be extended to curved paths as well without loss of generality, since a curved path can be considered as a continuum of the artificially small piecewise linear paths (e.g. $d(t_k) := \sum_{i=0}^{k-1} \Delta d(t_i, t_{i+1})$). When the MS 801 travels from position A to position B along the line 803, its distance from the Tx (base station) 802 changes from R (at location A) to $R_{act}$ (at location B). When $\overline{AB}$ = d, the estimated Tx-Rx distance at location B, $R_{est}$, can be taken as follows.

$$R_{est} = \widehat{R}_{act} = R - d \cos \theta \quad \text{(Equation 7)}$$

It should be noted that when R >> d then $R_{est} \cong R_{act}$.

Figure 8B shows a diagram 810 showing a Tx-Rx distance estimate ($R_{est}$, increasing from bottom to top along vertical axis 811) based on the MS's travel distance with respect to Tx (dcos$\theta$) and its precision over $\theta$ (increasing from left to right along horizontal axis 812).

The diagram 810 illustrates the error behavior over $\theta$ [rad] for various mobile speeds v, when R = 500m. As can be seen, the overall error rate is much lower than 0.01 (1%; line 813 in figure 8) with respect to the actual Tx-Rx distance difference ($\Delta R_{act} = |R_{act} - R|$) for most of the $\theta$ values. An exception can be observed in a very narrow window in the vicinity of $\theta = \pi/2$.

Due to the definition of Doppler spread, i.e., 
$$f_{DoS} := \frac{vf_c}{c} \cdot \cos(\theta),$$
$d(t_k)$ can be further formulated as follows.

$$d(t_k) := \sum_{i=0}^{k-1} \Delta d(t_i, t_{i+1}) = -\sum_{i=0}^{k-1} \frac{c}{f_c} \cdot \overline{f_{DoS}} \cdot \Delta t, \quad \text{(Equation 8)}$$

where 
$$\overline{f_{DoS}} = \frac{f_{DoS}(t_i) + f_{DoS}(t_{i+1})}{2},$$
$\Delta t = t_{i+1} - t_i$. As the Doppler spread estimate $f_{DoS}$ can typically be easily acquired at the modem baseband processor (typically at the inner receiver), the distance to the Tx can be calculated by (Equation 6) if $R_0$ is available.

It may be assumed that $R_0$ belongs to the predefined set of e.g., $\mathcal{R}$ = {50,100,200,500,1000}, and a linear regression may be performed for each case (for

$$\forall R_i \in \mathcal{R}$$

) to find the one showing the best regression quality (one that provides the least mean squared error for example). This procedure can be performed iteratively to further narrow down the range of $R_0$, if necessary. As the linear regression itself does not require highly complex computation, this approach can reduce the overall computational complexity without compromising its accuracy nor requiring the Tx-Rx distance estimate that may be difficult or expensive to obtain.

For determining the regression window, the MS mobility direction may be considered. The regression window herein is defined as the set of samples which are used for one regression operation. The linear relationship between the logarithm of the Tx-Rx distance (i.e. the distance between the base station and the mobile station) and the received signal power in dB/m holds for a certain point-to-point (BS-MS) link as long as the separation either increases (negative slope) or decreases (positive slope). Detecting the change direction of this distance (slope) provides information on whether the MS is moving toward or away from the BS. Such information as well as the information on whether the MS is still connected to the BS or has been handed over to another BS may be used to configure the regression window. This scenario detection can be based on readily available information in a typical MS, such as Doppler spread estimate. The MS mobility direction information can for example be acquired by monitoring the Doppler spread estimate (its sign behavior over time) and the handover to another BS can for example be indicated by network signaling message.

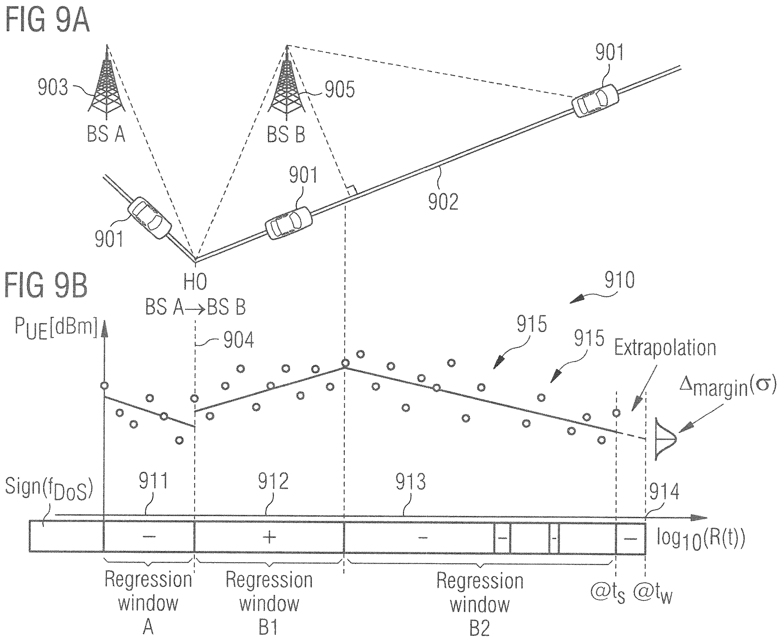

Figure 9A illustrates a typical operation scenario and its handling according to one example.

Figure 9B shows a corresponding diagram 910 indicating the reception power at the MS 901 along the route 902.

A MS 901 (for example located in a car) is moving (e.g. with a high speed), following a route 902 depicted as a solid grey line. While the approaches described above and in the following may be applied for all expected ranges of mobility, it may be particularly beneficial in high speed scenarios, because (1) such speed typically implies more linear travel paths and more accurate regression window configurations, and (2) a larger variation of received signal power translates to greater benefit of an AGC gain adjustment. In the scenario of figure 9, at first, the MS 901 is connected with a first base station 903 (BS A), and as it travels away from BS A along the route 902, its received signal strength becomes weaker. At this stage, sign($f_{DoS}$) is minus. At a certain first point 904 along the route 902, a handover from BS A to a second base station 905 (BS B) takes place (there can be a sudden signal strength jump due to HO as indicated in Figure 5), and as the MS travels towards BS B, its received signal strength becomes stronger until the MS starts to move away from BS B; at this stage, sign($f_{DoS}$) is (+). Afterwards, the MS 901 travels away from BS B and accordingly the received signal strength becomes weaker: At this phase, sign($f_{DoS}$) is (-).

As can be seen in this example, the regression window border can be set upon an event of sign($f_{DoS}$) change or handover, such that there is a first regression window 911 (A) followed by a second regression window 912 (B1) after the first point 904, which is in turn followed by a third regression window 913 (B2) after a second point 905 on the route.

The MS 901 can keep collecting samples that belong to the same regression window just in case that it needs to perform regression in order to predict the future signal strength. If the regression window reset condition is met (due to sign($f_{DoS}$) change or handover, etc.), the regression set is flushed out and it starts collecting new samples (for the following regression window). When it needs to perform regression due to the imminent sleep time (starts at $t_s$), it performs a regression based on the collected samples belonging to the current regression window/set, in this example in the third regression window 913 (B2). The regression model can be used to extrapolate the path loss trend to predict the received signal strength at the time of wake-up 914 ($t_w$). The resultant gain at $t_w$ can be set by applying the gain backoff ($\Delta_{margin}(\sigma)$) via taking into account the log-normal distribution of shadow fading. It should be noted here that even though the third regression window 913 B2 may have short disruptions of connection (shaded areas 915) due to, e.g., DRX, measurement gaps, etc., the overall regression window B2 may be more suitable for covering the whole area as long as its trend of negative $f_{DoS}$ holds, to provide a better/reliable regression result.

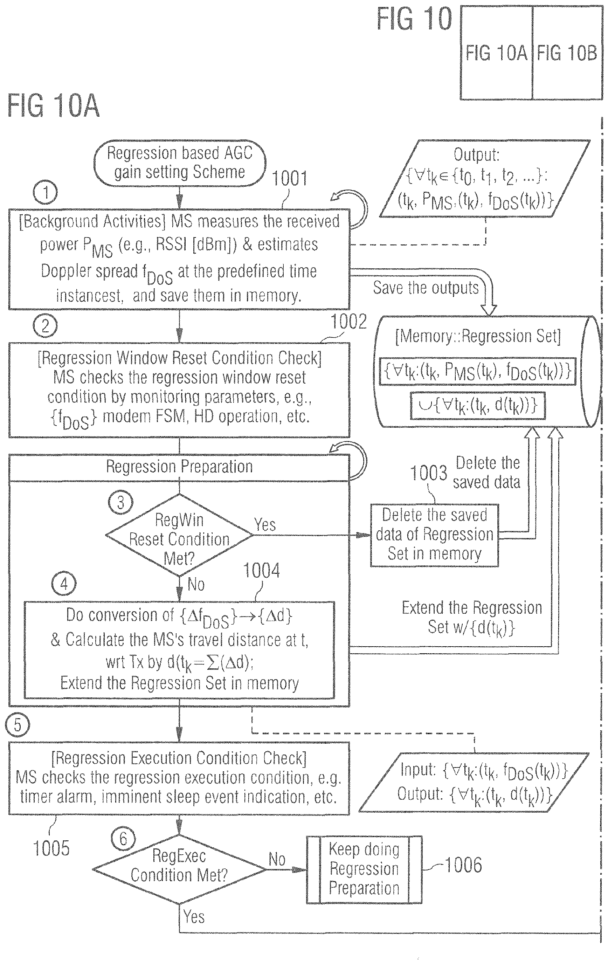

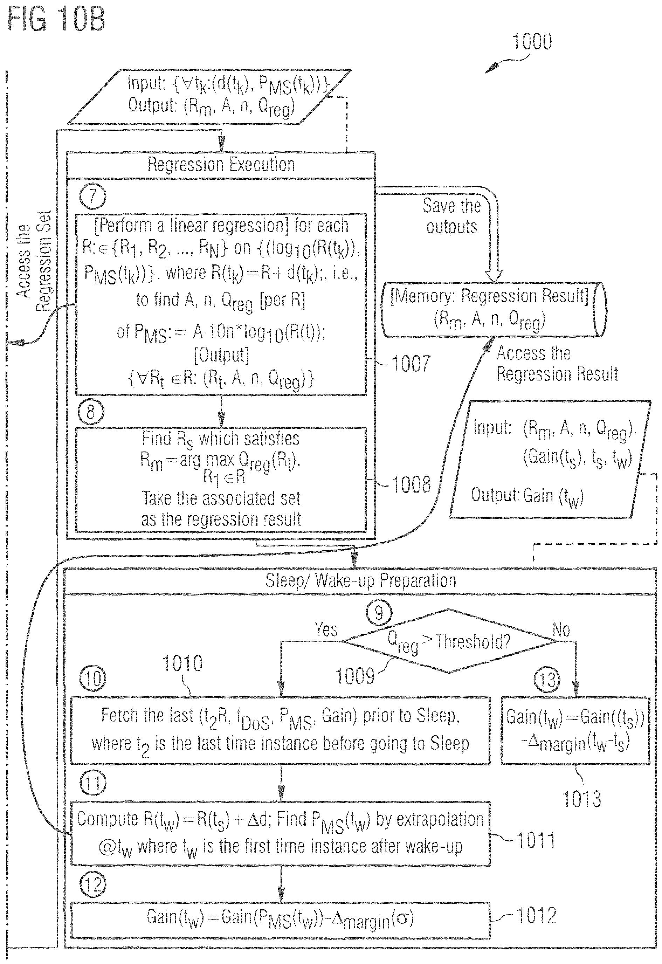

Figure 10 shows a flowchart 1000 that illustrates a regression-based AGC gain setting method.

In 1001, as a background/prerequisite activity, the MS measures the received signal strength $P_{MS}$ (e.g., RSSI) in absolute terms ([dBm]), and estimates Doppler spread $f_{DoS}$ at the predefined time instances $t_k$, and save them in a format of $\{\forall t_k \in (t_0, t_1, t_2, \cdots): (t_k, P_{MS}(t_k), f_{DoS}(t_k))\}$ into its memory for possible future usage for regression ($\rightarrow$ collecting samples in Regression Set).

In 1002, per each predefined time interval (e.g., subframe in case of LTE), the MS checks the regression window reset condition. For example, one or more of the following can be used as this reset condition (but not limited to): change of mobility direction (change of sign($f_{DoS}$)), Modem on/off operation, Handover, detection of low mobility ($\Delta t := t_e - t_b >$ $\tau$, when $[t_b, t_e] = \{\forall t: |f_{DoS}(t)| < \varepsilon\}$ ($\varepsilon$ is a small number)), etc.

In 1003, if the regression window reset condition is satisfied, the MS (e.g. its modem) deletes the saved data of regression set so far, then starts anew.

In 1004, for regression preparation, if the regression window reset condition is not satisfied, the modem calculates the MS's travel distance with respect to the transmitter by making use of $f_{DoS}(t_k)$ (see (Equation 8)), and extends the regression set in a format of $\{\forall t_k: (t_k, P_{MS}(t_k), f_{DoS}(t_k), d(t_k))\}$. The MS executes this regression preparation as long as the regression window reset condition is not satisfied. Alternatively, to save computation power, the MS executes the regression preparation only when regression certainly takes place. In this case, however, the MS takes the lead time required for regression preparation and execution carefully into account, so that modem can complete the required operation in time.

In 1005, the MS checks the regression execution condition. This regression execution condition is for example fulfilled in case of a timer alarm, or the anticipated event of imminent sleep operation, etc. For example, the MS only executes the regression operation when it is required, as it can be costly in terms of the required computational power at the modem.

In 1006, if the regression execution condition is not satisfied, the modem keeps doing the background activities and regression preparation.

In 1007, if the regression execution condition is satisfied, the modem performs a linear regression per each

$$R_i \in \mathcal{R} = \{50, 100, 200, 500, 1000\},$$

based on the samples in the regression set $\{\forall t_k: (\log_{10}(R(t_k)), P_{MS}(t_k))\}$ (refer to (Equation 6) on derivation of $R(t_k)$). In short, it is assumed that the received signal power follows the following formula and the MS acquires A, n and $Q_{reg}$ per each $R_i$, where $Q_{reg}$ is an indication of the regression quality (the higher, the more reliable regression result).

$$P_{MS} = A - 10 \cdot n \cdot \log_{10}(R(t))$$

In the end, the output is:

$$\{\forall R_i \in \mathcal{R}: (R_i, A, n, Q_{reg})\}.$$

It should be noted that a logarithm operation can be done using a look-up table to reduce computational complexity. For example, the same number of samples is used per each iteration of a linear regression per $R_i$ for the sake of a fair comparison of its reliability $Q_{reg}$ (in 1008).

In 1008, for regression execution, based on the output of 1007, the modem finds $R_m$ which satisfies

$$R_m = \arg \max_{R_i \in \mathcal{R}} Q_{reg}(R_i)$$

($R_m$ which provides the highest regression quality), and takes/saves the associated tuple ($R_m$, A, n, $Q_{reg}$) as the regression result.

In 1009, for sleep/wake-up Preparation, the MS checks whether the regression quality exceeds the predefined threshold.

If the regression quality exceeds the predefined threshold, i.e. if the regression quality is good, the MS fetches the last values ($t_s$, $R(t_s)$, $f_{DoS}$, $P_{MS}$, Gain) prior to sleep in 1010 and finds the gain at wake-up in 1012 as follows:

$$Gain(t_w) = Gain\big(P_{MS}(t_w)\big) - \Delta_{margin}(\sigma)$$

wherein it finds $P_{MS}(t_w)$ in 1011 by an extrapolation based on the linear regression model acquired in 1007 and 1008, $P_{MS}(t_w) = A - 10 \cdot n \cdot \log_{10}(R(t_w))$, and the gain setting is done according to its (predicted) received signal strength $P_{MS}(t_w)$. As a safety measure, an additional gain backoff $\Delta_{margin}(\sigma)$ can be applied, possibly based on the (measured or hard-coded) standard deviation $\sigma$ in an effort to consider the shadow fading effect (see (Equation 5)).

If the regression quality does not exceed the predefined threshold, i.e. if the regression quality is not so good, for sleep/wake-up preparation the MS sets the gain at wake-up can be set simply by applying the (sleep time-dependent) gain backoff on the latest known gain: $Gain(t_w) = Gain(t_s) - \Delta_{margin}(t_w - t_s)$.

According to an alternative approach, the MS uses the AGC gain setting of 1013 (without performing regression).

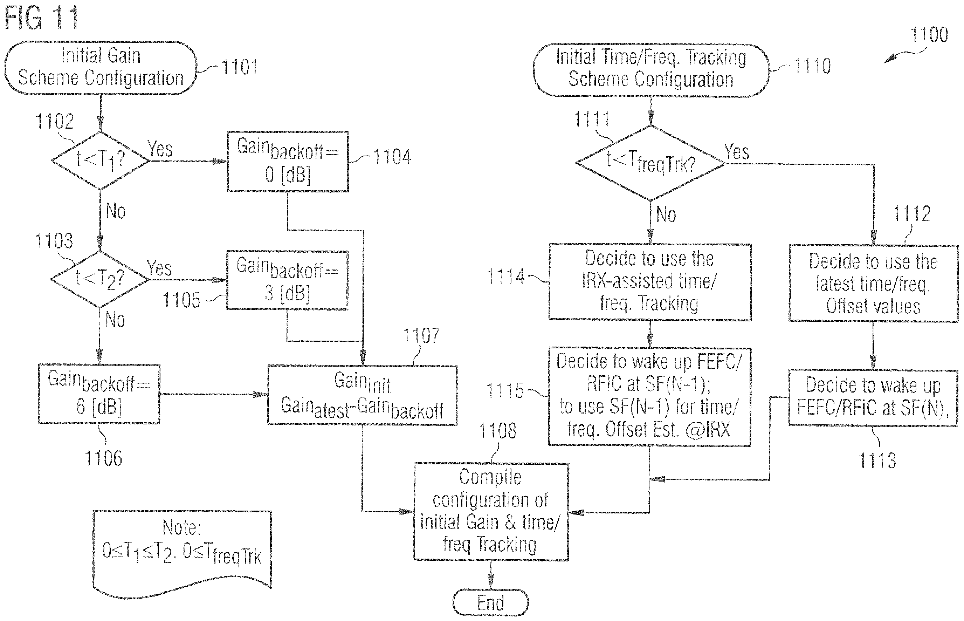

In the following, an efficient and simplified example is described which takes the elapsed time since the last RX_OFF event (i.e. the sleep time) into account for configuration of the initial AGC and time/frequency tracking scheme. Its algorithm is depicted as a flowchart in figure 11.

Figure 11 shows a flowchart 1100 illustrating initial gain and time/frequency tracking decisions according to an example.

Basically, there are two main decision flows, i.e., one (left side of figure 11), starting with 1101, for the initial AGC scheme configuration and the other (right side of figure 11), starting with 1110, for the initial time/frequency tracking scheme configuration.

In the left hand side flow, the gain backoff which can be one of {0, 3, 6}dB values is determined based on the elapsed time t according to

$$Gain_{backoff}(t) = \begin{cases} 0, & 0 \le t < T_1 \\ 3, & T_1 \le t < T_2, \text{ where } 0 \le T_1 \le T_2 \\ 6, & T_2 \le t \end{cases} \quad \text{(Equation 9)}$$

using corresponding comparisons 1102, 1103 and setting operations 1104, 1105, 1106.

In 1107, the initial gain is set as follows for the first subframe after wake-up:

$$Gain_{init} = Gain_{latest} - Gain_{backoff}(t) \quad \text{(Equation 10)}$$

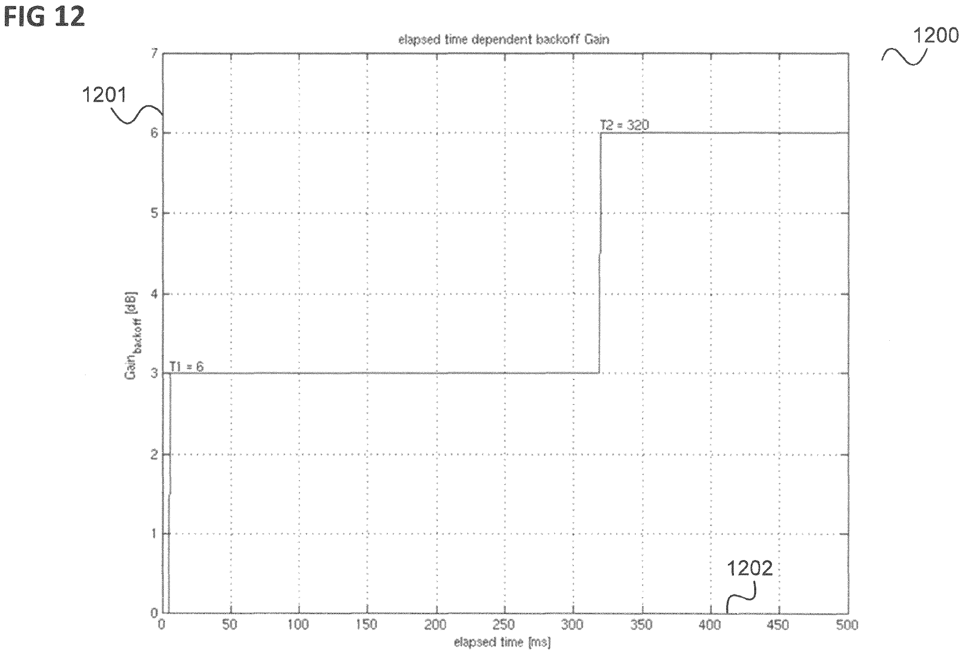

Figure 12 shows an example of the gain backoff function $Gain_{backoff}(t)$, which has been derived based on actual field measurement data with respect to "highway" scenario (high mobile speed) with Band20.

The values of the gain backoff function are shown, according to the vertical axis 1201, for values of the time t, increasing from left to right according to the horizontal axis 1202.

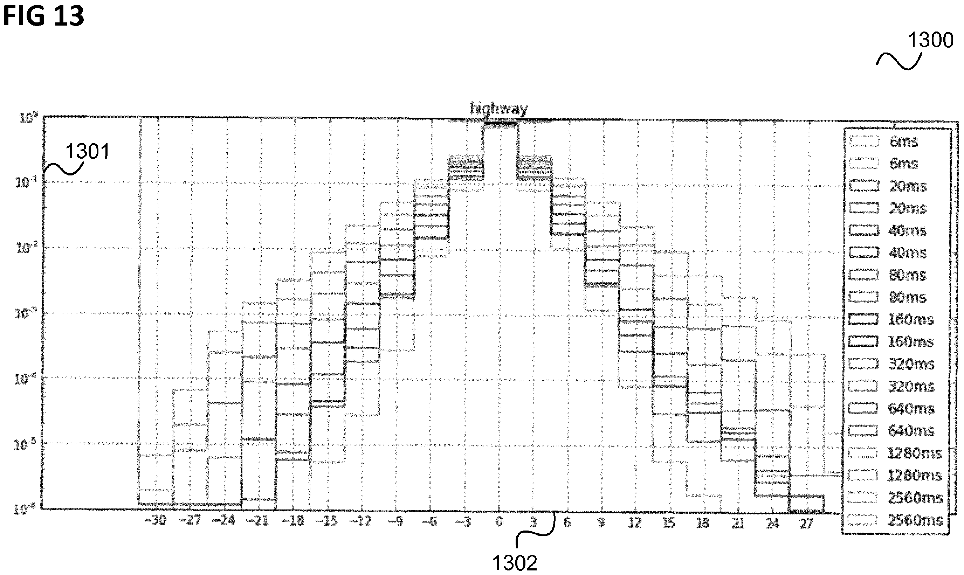

The values $T_1$ and $T_2$ have in this example been selected to provide 5 % outage probability for the highway case illustrated in figure 13.

Figure 13 shows a diagram 1300 showing the relative occurrence rate of gain changes (in 3dB steps) over different time windows in a highway scenario, wherein the relative occurrence rate is given in accordance with the vertical axis 1301 and the gain change is given in accordance with the horizontal axis 1302. Both the CDF (cumulative density function; step-up lines) and the CCDF (complementary CDF; step-down lines) are shown.

The diagram 1300 shows these for a time window size of 6ms, 20ms, 40ms, 80ms, 160ms, 320ms, 640ms, 1280ms and 2560ms resulting in respective curves 1303-1311. Generally, the longer the time window, the higher the probability for a gain change.

The values $T_1$ and $T_2$ being in the above example selected to provide 5 % outage probability means that when $t < T_1$ (or $T_2$), the probability of the gain in the first subframe after wake-up being higher than $\text{Gain}_{latest}$ - 3dB (or -6dB in case of $T_2$) is less than 5 %. For example, table 1 below can be used as a guideline for $T_1$ and $T_2$ values. The "city" scenario is based on the field measurement data taken with medium mobile speed with Band3. It may be sufficient for a wide range of applications to use a simplified absolute time based scheme which is represented by Equations 9 and 10. Based on the values provided in table 1, the initial $T_1$ and $T_2$ values can be selected, which are subject to change based on simulation/lab test/field test results. For example, $T_1$ and $T_2$ values are stored as parameters in the NVM (NonVolatile Memory) MS so that an on-the-run calibration of these values is possible.

| Outage probability / Scenario | 5 % | 1 % |
|---|---|---|
| City | (6, 640) | (0, 20) |
| Highway | (6, 320) | (0, 10) |

Table 1

In the right hand side flow of figure 11, the configuration of the initial time/frequency tracking scheme. If the elapsed time is less than a predefined decision criteria of $T_{freqTrk}$, (decision 1111) the latest time/frequency offset values are in 1112 deemed to be still valid and therefore are used for time/frequency tracking at the subframe right after wake-up, without having to use one additional subframe for time/frequency offset estimation and thus decides to perform a wake up for SF(N) in 1113. Otherwise, in 1114, the L1CC decides to resort to IRX-assisted time/frequency tracking, i.e., to allocate one subframe (SF(N-1)) prior to the subframe of interest (SF(N)) solely for time/frequency offset estimation, as the previous estimates seem obsolete and thus decides to perform a wake up for SF(N-1) in 1115. The initial value of $T_{freqTrk}$ can be acquired by simulation, lab test or field test. For example, an initial value of 100ms is used and calibration is performed during the course of field testing. To facilitate easy calibration on the field $T_{freqTrk}$ may be defined as parameter stored in NVM.

In 1108, the results of both flows are applied for the wake-up.

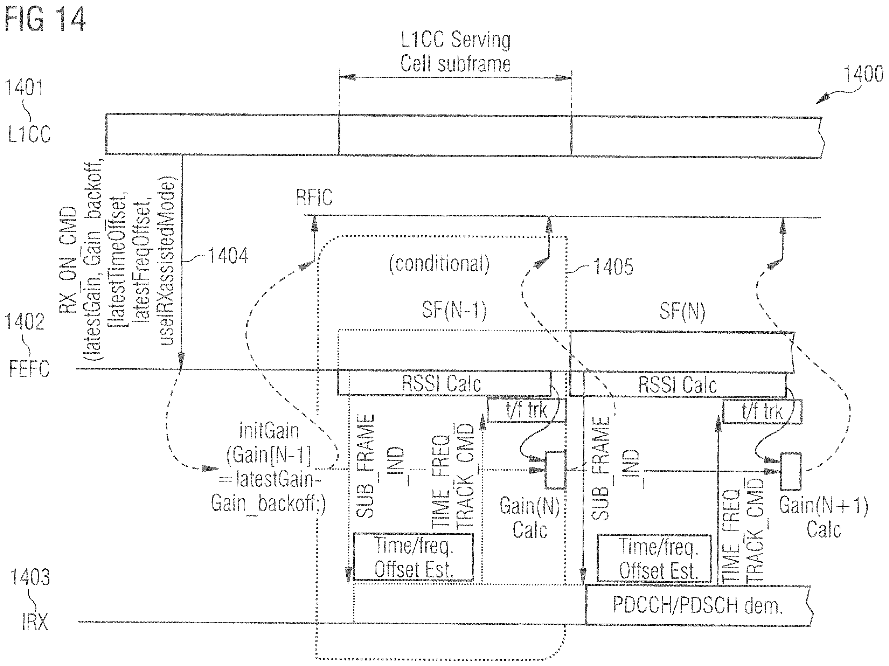

Figure 14 illustrates an interaction between involved MS subcomponents, e.g. for the approach of figure 11.

As in figures 3 and 4, time flows from left to right and the actions of modem components 1401, 1402, 1402 are illustrated.

Before wake-up, i.e. during the inactivity period, the L1CC 1101 sends a RX_ON_CMD message 1404 to the FEFC 1102.

The RX_ON_CMD message 1404 can have a field like "useIRXassistedMode" to indicate whether the IRX-assisted time/frequency offset estimation 1405 is required at SF(N-1) or not, e.g. determined by the L1CC 1401 according to the decision scheme of figure 11. As the L1CC 1401 determines whether to perform this operation at SF(N-1) conditionally, the overall operation is flexible and more adaptive to the channel parameter (gain, time/frequency offset) variation status, which leads to more power-efficient operation compared to the approaches of figures 3 and 4. It should be noted that the L1CC decision (e.g. according to the decision scheme of figure 11) for example takes place at SF(N-2) at latest, as the FEFC 1402 or the RFIC might need to be woken up to receive SF(N-1) depending on the result of L1CC decision.

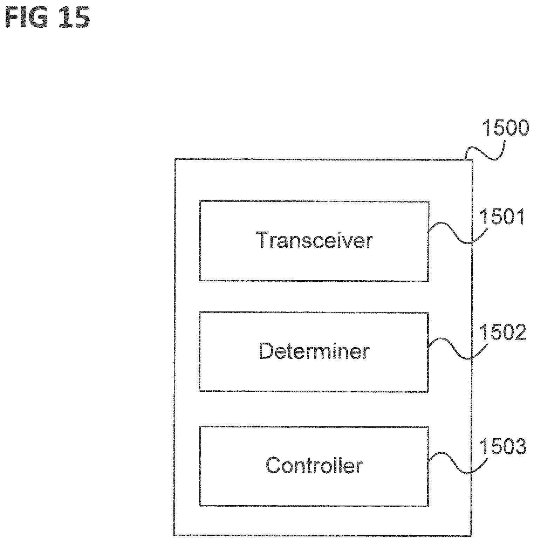

In summary, according to various examples, a communication device is provided as illustrated in figure 15.

Figure 15 shows a communication device 1500.

The communication device 1500 comprises a transceiver configured to be inactive during a period of inactivity.

Further, the communication device comprises a determiner configured to determine a length of the period of inactivity and a controller configured to at least one of set a gain of the transceiver when it starts receiving data after the period of inactivity and switch on a time and frequency offset estimation by the transceiver after the period of inactivity based on the length of the period of inactivity.

According to various examples, in other words, a communication device such as a communication terminal (e.g. a mobile phone) sets the gain of its transceiver or switches on (i.e. turns on) a time and frequency offset estimation or both based on the length of an inactivity period, during which the transceiver is inactive. The inactivity period may for example correspond to a sleep mode, during which the reception of signals according to a certain radio access technology (RAT, e.g. LTE, 3G, 2G, Bluetooth, WiFi) and for example for a certain subscriber identity module (SIM) in case the communication device has a plurality subscriber identity modules, is deactivated, i.e. is not performed (while the terminal may for example still receive signals according to another radio access technology (i.e. the receive path for one RAT and one SIM may be deactivated while it is still activated for another RAT or SIM). The period of inactivity may for example comprise that the baseband processor (processing signals according to the respective RAT) is switched off except for a component which performs the wake-up control.

The components of the communication device (e.g. the transceiver, the determiner and the controller) may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions which will be described in more detail below may also be understood as a "circuit". The communication device may further comprises a memory for storing any data used in the processing.

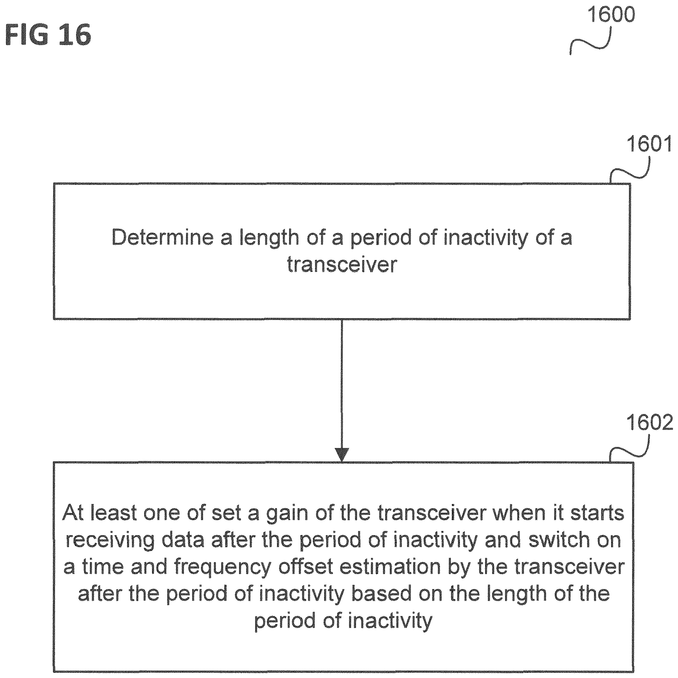

The communication device for example carries out a method as illustrated in figure 16.

Figure 16 shows a method for resuming data reception, for example carried out by a communication device.

In 1601, the communication device determines a length of a period of inactivity of a (e.g. its) transceiver.

In 1602, the communication device performs at least one of:

setting a gain of the transceiver when it starts receiving data after the period of inactivity; and switching on a time and frequency offset estimation by the transceiver after the period of inactivity based on the length of the period of inactivity.

According to a further example, a communication terminal is provided comprising a receiver configured to pause signal reception during a reception pause, and a controller configured to at least one of set a reception gain for reception of signals by the receiver after the reception pause and switch on a receiver-aided time and frequency offset estimation by the transceiver after the period of inactivity based on the length of the reception pause.

It should be noted that one or more of the features of any of the examples above may be combined with any one of the other examples.

**Claims**

1. A communication device (801, 901, 1500) comprising:

a transceiver (501, 1501) configured to be inactive during a period of inactivity; a determiner (502, 1401, 1502) configured to determine a length of the period of inactivity; and a controller (502, 1401, 1503) configured to set a gain of the transceiver (501, 1501) when the transceiver (501, 1501) starts receiving data after the period of inactivity, wherein the transceiver (501, 1501) is controlled to collect reception power samples before the period of inactivity, wherein a regression model is generated based on the reception power samples, wherein the gain of the transceiver (501, 1501) is determined based on the regression model using the length of the period of inactivity to set the gain of the transceiver (501, 1501) when the transceiver (501, 1501) starts receiving data after the period of inactivity.

2. The communication device (801, 901, 1500) according to claim 1, wherein the controller (502, 1401, 1503) is configured to switch on a time and frequency offset estimation (1405) by the transceiver (501, 1501) after the period of inactivity conditionally on the length of the period of inactivity.

3. The communication device (801, 901, 1500) according to claim 2, wherein the controller (502, 1401, 1503) is configured to prolong the period of inactivity if it does not switch on the time and frequency offset estimation (1405) by the transceiver (501, 1501) by a time required for the time and frequency estimation by the transceiver (501, 1501).

4. The communication device (801, 901, 1500) according to claim 2 or 3, wherein the controller (502, 1401, 1503) is configured to control the receiver (501, 1501) to perform the time and frequency offset estimation (1405) after the period of inactivity before receiving the data if it switches on the time and frequency offset estimation (1405) by the transceiver (501, 1501) after the period of inactivity.

5. The communication device (801, 901, 1500) according to any one of claims 2 to 4, wherein the controller (502, 1401, 1503) is configured to control the receiver (501, 1501) to perform the time and frequency offset estimation (1405) in a sub-frame after the period of inactivity before a sub-frame in which the transceiver (501, 1501) receives the data after the period of inactivity.

6. The communication device (801, 901, 1500) according to any one of claims 2 to 5, wherein the time and frequency offset estimation (1405) by the transceiver (501, 1501) comprises an inner receiver (1403) assisted time and frequency tracking.

7. The communication device (801, 901, 1500) according to any one of claims 2 to 6, wherein the controller (502, 1401, 1503) is configured to control the transceiver (501, 1501) to receive data after the period of inactivity based on the last time and frequency offset values used by the transceiver (501, 1501) for receiving data before entering the period of inactivity if the controller (502, 1401, 1503) does not switch on the time and frequency offset estimation (1405) by the transceiver (501, 1501).

8. The communication device (801, 901, 1500) according to any one of claims 1 to 7, wherein the controller (502, 1401, 1503) is configured to set the gain of the transceiver (501, 1501) when it starts receiving data to the last gain used by the transceiver (501, 1501) for receiving data before the period of activity (913) reduced by an amount dependent on the length of the period of inactivity.

9. The communication device (801, 901, 1500) according to claim 8, wherein the controller (502, 1401, 1503) is configured to set the amount dependent of the length of the period of inactivity based on a step function of the period of inactivity.

10. The communication device (801, 901, 1500) according to claim 8 or 9, wherein the amount dependent of the length of the period of inactivity comprises a multiple of the length of the period of inactivity.

11. The communication device (801, 901, 1500) according to any one of claims 1 to 10, wherein the controller (502, 1401, 1503) is configured to extrapolate the reception power samples (606) based on the regression model from the beginning of period of inactivity to the end of period of inactivity to determine the gain of the transceiver (501, 1501) when it starts receiving data based on the extrapolated reception power samples (606).

12. The communication device (801, 901, 1500) according to any one of claims 1 to 11, wherein the controller (502, 1401, 1503) is configured to determine a regression quality of the regression model and to determine the gain of the transceiver (501, 1501) when it starts receiving data based on the regression model if the regression quality fulfills a predetermined criterion and to set the gain of the transceiver (501, 1501) when it starts receiving data to the last gain used by the transceiver (501, 1501) for receiving data before the period of activity reduced by an amount dependent on the length of the period of inactivity if the regression quality does not fulfill the predetermined criterion.

13. The communication device (801, 901, 1500) according to any one of claims 1 to 12, wherein the controller (502, 1401, 1503) is configured to determine a path loss trend based on the reception power samples (606) and to determine the gain of the transceiver (501, 1501) when it starts receiving data based on the path loss trend.

14. A method for resuming data reception comprising:

   determining a length of a period of inactivity of a transceiver (501, 1501);
   setting a gain of the transceiver (501, 1501) when the transceiver (501, 1501) starts receiving data after the period of inactivity;
   collecting reception power samples before the period of inactivity;
   generating a regression model based on the reception power samples;
   determining the gain of the transceiver (501, 1501) based on the regression model using the length of the period of inactivity to set the gain of the transceiver (501, 1501) when the transceiver (501, 1501) starts receiving data after the period of inactivity.

15. The method according to claim 14, further comprising:
   switching on a time and frequency offset estimation (1405) by the transceiver (501, 1501) after the period of inactivity conditionally on the length of the period of inactivity.

**Patentansprüche**

1. Kommunikationsvorrichtung (801, 901, 1500), umfassend:

   einen Sendeempfänger (501, 1501), der so konfiguriert ist, dass er während einer Inaktivitätsperiode inaktiv ist;
   einen Bestimmer (502, 1401, 1502), der so konfiguriert ist, dass er eine Länge der Inaktivitätsperiode bestimmt; und
   einen Controller (502, 1401, 1503), der so konfiguriert ist, dass er eine Verstärkung des Sendeempfängers (501, 1501) einstellt, wenn der Sendeempfänger (501, 1501) nach der Inaktivitätsperiode beginnt, Daten zu empfangen, wobei der Sendeempfänger (501, 1501) so gesteuert wird, dass er Empfangsleistungsproben vor der Inaktivitätsperiode sammelt,
   wobei ein Regressionsmodell basierend auf Empfangsleistungsproben erzeugt wird, wobei die Verstärkung des Sendeempfängers (501, 1501) basierend auf dem Regressionsmodell unter Verwendung der Länge der Inaktivitätsperiode bestimmt wird, um die Verstärkung des Sendeempfängers (501, 1501) einzustellen, wenn der Sendeempfänger (501, 1501) beginnt, nach der Inaktivitätsperiode Daten zu empfangen.

2. Kommunikationsvorrichtung (801, 901, 1500) nach Anspruch 1, wobei der Controller (502, 1401, 1503) so konfiguriert ist, dass er eine Zeit- und Frequenzverschiebungsschätzung (1405) durch den Sendeempfänger (501, 1501) nach der Inaktivitätsperiode abhängig von der Länge der Inaktivitätsperiode einschaltet.

3. Kommunikationsvorrichtung (801, 901, 1500) nach Anspruch 2, wobei der Controller (502, 1401, 1503) so konfiguriert ist, dass er die Inaktivitätsperiode, wenn er die Zeit- und Frequenzverschiebungsschätzung (1405) durch den Sendeempfänger (501, 1501) nicht einschaltet, um eine Zeit verlängert, die für die Zeit- und Frequenzschätzung durch den Sendeempfänger (501, 1501) erforderlich ist.

4. Kommunikationsvorrichtung (801, 901, 1500) nach Anspruch 2 oder 3, wobei der Controller (502, 1401, 1503) so konfiguriert ist, dass er den Empfänger (501, 1501) so steuert, dass er die Zeit- und Frequenzverschiebungsschätzung (1405) nach der Inaktivitätsperiode vor dem Empfang der Daten durchführt, wenn er die Zeit- und Frequenzverschiebungsschätzung (1405) durch den Sendeempfänger (501, 1501) nach der Inaktivitätsperiode einschaltet.

5. Kommunikationsvorrichtung (801, 901, 1500) nach einem der Ansprüche 2 bis 4, wobei der Controller (502, 1401, 1503) so konfiguriert ist, dass er den Empfänger (501, 1501) so steuert, dass er die Zeit- und Frequenzverschiebungsschätzung (1405) in einem Subframe nach der Inaktivitätsperiode vor einem Subframe durchführt, in dem der Sendeempfänger (501, 1501) die Daten nach der Inaktivitätsperiode empfängt.

6. Kommunikationsvorrichtung (801, 901, 1500) nach einem der Ansprüche 2 bis 5, wobei die Zeit- und Frequenzverschiebungsschätzung (1405) durch den Sendeempfänger (501, 1501) eine Zeit- und Frequenzverfolgung umfasst, die durch einen inneren Empfänger (1403) unterstützt wird.

7. Kommunikationsvorrichtung (801, 901, 1500) nach einem der Ansprüche 2 bis 6, wobei der Controller (502, 1401, 1503) so konfiguriert ist, dass er den Sendeempfänger (501, 1501) so steuert, dass er nach der Inaktivitätsperiode Daten empfängt basierend auf den letzten Zeit- und Frequenzverschiebungswerten, die vom Sendeempfänger (501, 1501) für den Empfang von Daten vor Eintreten in die Inaktivitätsperiode verwendet wurden, falls der Controller (502, 1401, 1503) die Zeit- und Frequenzverschiebungsschätzung (1405) durch den Sendeempfänger (501, 1501) nicht einschaltet.

8. Kommunikationsvorrichtung (801, 901, 1500) nach einem der Ansprüche 1 bis 7, wobei der Controller (502, 1401, 1503) so konfiguriert ist, dass er die Verstärkung des Sendeempfängers (501, 1501) einstellt, wenn er beginnt, Daten auf die letzte vom Sendeempfänger (501, 1501) verwendete Verstärkung zu empfangen, um Daten vor der Aktivitätsperiode (913) zu empfangen, die um einen Betrag reduziert wird, der von der Länge der Inaktivitätsperiode abhängt.

9. Kommunikationsvorrichtung (801, 901, 1500) nach Anspruch 8, wobei der Controller (502, 1401, 1503) so konfiguriert ist, dass er den Betrag abhängig von der Länge der Inaktivitätsperiode basierend auf einer Stufenfunktion der Inaktivitätsperiode einstellt.

10. Kommunikationsvorrichtung (801, 901, 1500) nach Anspruch 8 oder 9, wobei der von der Länge der Inaktivitätsperiode abhängige Betrag ein Vielfaches der Länge der Inaktivitätsperiode umfasst.

**11.** Kommunikationsvorrichtung (801, 901, 1500) nach einem der Ansprüche 1 bis 10, wobei der Controller (502, 1401, 1503) so konfiguriert ist, dass er die Empfangsleistungsproben (606) basierend auf dem Regressionsmodell vom Beginn der Inaktivitätsperiode bis zum Ende der Inaktivitätsperiode extrapoliert, um die Verstärkung des Sendeempfängers (501, 1501) zu bestimmen, wenn er beginnt, Daten basierend auf extrapolierten Empfangsleistungsproben (606) zu empfangen.

**12.** Kommunikationsvorrichtung (801, 901, 1500) nach einem der Ansprüche 1 bis 11, wobei der Controller (502, 1401, 1503) so konfiguriert ist, dass er eine Regressionsgüte des Regressionsmodells und die Verstärkung des Sendeempfängers (501, 1501) bestimmt, wenn er beginnt, Daten basierend auf dem Regressionsmodell zu empfangen, wenn die Regressionsgüte ein vorbestimmtes Kriterium erfüllt, und die Verstärkung des Sendeempfängers (501, 1501) einstellt, wenn er beginnt, Daten auf die letzte Verstärkung zu empfangen, die vom Sendeempfänger (501, 1501) für den Empfang von Daten vor der Aktivitätsperiode verwendet wurde, die um einen Betrag reduziert wird, der von der Länge der Inaktivitätsperiode abhängt, wenn die Regressionsgüte das vorgegebene Kriterium nicht erfüllt.

**13.** Kommunikationsvorrichtung (801, 901, 1500) nach einem der Ansprüche 1 bis 12, wobei der Controller (502, 1401, 1503) so konfiguriert ist, dass er einen Pfadverlusttrend basierend auf Empfangsleistungsproben (606) bestimmt und die Verstärkung des Sendeempfängers (501, 1501) bestimmt, wenn er beginnt, Daten basierend auf dem Pfadverlusttrend zu empfangen.

**14.** Verfahren zum Wiederaufnehmen des Datenempfangs, umfassend:

Bestimmen einer Länge einer Inaktivitätsperiode eines Sendeempfängers (501, 1501);
Einstellen einer Verstärkung des Sendeempfängers (501, 1501), wenn der Sendeempfänger (501, 1501) beginnt, Daten nach der Inaktivitätsperiode zu empfangen;
Sammeln von Empfangsleistungsproben vor der Inaktivitätsperiode;
Erzeugen eines Regressionsmodells basierend auf den Empfangsleistungsproben;
Bestimmen der Verstärkung des Sendeempfängers (501, 1501) basierend auf dem Regressionsmodell unter Verwendung der Länge der Inaktivitätsperiode, um die Verstärkung des Sendeempfängers (501, 1501) einzustellen,
wenn der Sendeempfänger (501, 1501) beginnt, nach der Inaktivitätsperiode Daten zu empfangen.

**15.** Verfahren nach Anspruch 14, ferner umfassend:
Einschalten einer Zeit- und Frequenzverschiebungsschätzung (1405) durch den Sendeempfänger (501, 1501) nach der Inaktivitätsperiode, abhängig von der Länge der Inaktivitätsperiode.

## Revendications

**1.** Un dispositif de communication (801, 901, 1500) comprenant :

un émetteur-récepteur (501, 1501) configuré pour être inactif pendant une période d'inactivité ;
un détermineur (502, 1401, 1502) configuré pour déterminer une durée de la période d'inactivité ; et
un contrôleur (502, 1401, 1503) configuré pour ajuster un gain de l'émetteur-récepteur (501, 1501) lorsque l'émetteur-récepteur (501, 1501) commence à recevoir des données après la période d'inactivité,
dans lequel l'émetteur-récepteur (501, 1501) est contrôlé pour recueillir des échantillons de puissance de réception avant la période d'inactivité,
dans lequel un modèle de régression est généré sur la base des échantillons de puissance de réception,
dans lequel le gain de l'émetteur-récepteur (501, 1501) est déterminé sur la base du modèle de régression en utilisant la durée de la période d'inactivité pour ajuster le gain de l'émetteur-récepteur (501, 1501) lorsque l'émetteur-récepteur (501, 1501) commence à recevoir des données après la période d'inactivité.

**2.** Le dispositif de communication (801, 901, 1500) selon la revendication 1, dans lequel le contrôleur (502, 1401, 1503) est configuré pour déclencher une application de décalage de temps et de fréquence (1405) par l'émetteur-récepteur (501, 1501) après la période d'inactivité, d'une façon conditionnée par la durée de la période d'inactivité.

**3.** Le dispositif de communication (801, 901, 1500) selon la revendication 2, dans lequel le contrôleur (502, 1401, 1503) est configuré pour prolonger la période d'inactivité s'il ne déclenche pas l'estimation de décalage de temps et de fréquence (1405) par l'émetteur-récepteur (501, 1501) d'une durée requise pour l'estimation de temps et de fréquence par l'émetteur-récepteur (501, 1501).

4. Le dispositif de communication (801, 901, 1500) selon la revendication 2 ou 3, dans lequel le contrôleur (502, 1401, 1503) est configuré pour contrôler le récepteur (501, 1501) pour effectuer l'estimation de décalage de temps et de fréquence (1405) après la période d'inactivité avant réception des données s'il déclenche l'estimation de décalage de temps et de fréquence (1405) par l'émetteur-récepteur (501, 1501) après la période d'inactivité.

5. Le dispositif de communication (801, 901, 1500) selon l'une des revendications 2 à 4, dans lequel le contrôleur (502, 1401, 1503) est configuré pour contrôler le récepteur (501, 1501) pour effectuer l'estimation de décalage de temps et de fréquence (1405) dans une sous-trame après la période d'inactivité avant une sous-trame dans laquelle l'émetteur-récepteur (501, 1501) reçoit des données après la période d'inactivité.

6. Le dispositif de communication (801, 901, 1500) selon l'une des revendications 2 à 5, dans lequel l'estimation de décalage de temps et de fréquence (1405) par l'émetteur-récepteur (501, 1501) comprend un suivi de temps et de fréquence assisté par un récepteur interne (1403).

7. Le dispositif de communication (801, 901, 1500) selon l'une des revendications 2 à 6, dans lequel le contrôleur (502, 1401, 1503) est configuré pour contrôler l'émetteur-récepteur (501, 1501) pour recevoir des données après la période d'inactivité sur la base des dernières valeurs de décalage de temps et de fréquence utilisées par l'émetteur-récepteur (501, 1501) pour la réception de données avant d'entrer dans la période d'inactivité si le contrôleur (502, 1401, 1503) ne déclenche pas l'estimation de décalage de temps et de fréquence (1405) par l'émetteur-récepteur (501, 1501).

8. Le dispositif de communication (801, 901, 1500) selon l'une des revendications 1 à 7, dans lequel le contrôleur (502, 1401, 1503) est configuré pour ajuster le gain de l'émetteur-récepteur (501, 1501), lorsqu'il commence à recevoir des données, sur le dernier gain utilisé par l'émetteur-récepteur (501, 1501) pour la réception des données avant la période d'activité (913), réduit d'une quantité fonction de la durée de la période d'inactivité.

9. Le dispositif de communication (801, 901, 1500) selon la revendication 8, dans lequel le contrôleur (502, 1401, 1503) est configuré pour ajuster la quantité fonction de la durée de la période d'inactivité sur la base d'une fonction en escalier de la période d'inactivité.

10. Le dispositif de communication (801, 901, 1500) selon la revendication 8 ou 9, dans lequel la quantité fonction de la durée de la période d'inactivité comprend un multiple de la durée de la période d'inactivité.

11. Le dispositif de communication (801, 901, 1500) selon l'une des revendications 1 à 10, dans lequel le contrôleur (502, 1401, 1503) est configuré pour extrapoler les échantillons de puissance de réception (606) sur la base du modèle de régression depuis le début de la période d'inactivité jusqu'à la fin de la période d'inactivité pour déterminer le gain de l'émetteur-récepteur (501, 1501) lorsqu'il commence à recevoir des données sur la base des échantillons de puissance de réception extrapolés (606).

12. Le dispositif de communication (801, 901, 1500) selon l'une des revendications 1 à 11, dans lequel le contrôleur (502, 1401, 1503) est configuré pour déterminer une qualité de régression du modèle de régression et pour déterminer le gain de l'émetteur-récepteur (501, 1501) lorsqu'il commence à recevoir des données sur la base du modèle de régression si la qualité de régression vérifie un critère prédéterminé, et pour ajuster le gain de l'émetteur-récepteur (501, 1501), lorsqu'il commence à recevoir des données, sur le dernier gain utilisé par l'émetteur-récepteur (501, 1501) pour recevoir des données avant la période d'activité, réduit d'une quantité fonction de la durée de la période d'inactivité si la qualité de régression ne vérifie pas le critère prédéterminé.

13. Le dispositif de communication (801, 901, 1500) selon l'une des revendications 1 à 12, dans lequel le contrôleur (502, 1401, 1503) est configuré pour déterminer une tendance de pertes dues au trajet sur la base des échantillons de puissance de réception (606), et pour déterminer le gain de l'émetteur-récepteur (501, 1501), lorsqu'il commence à recevoir des données, sur la base de la tendance des pertes de trajet.

14. Un procédé de reprise d'une réception de données comprenant :

la détermination d'une durée d'une période d'inactivité d'un émetteur-récepteur ;
l'ajustement d'un gain de l'émetteur-récepteur (501, 1501) lorsque l'émetteur-récepteur (501, 1501) commence à recevoir des données après la période d'inactivité ;

le recueil d'échantillons de puissance de réception avant la période d'inactivité ;

la génération d'un modèle de régression sur la base des échantillons de puissance de réception ;

la détermination du gain de l'émetteur-récepteur (501, 1501) sur la base du modèle de régression en utilisant la durée de la période d'inactivité pour ajuster le gain de l'émetteur-récepteur (501, 1501) lorsque l'émetteur-récepteur (501, 1501) commence à recevoir des données après la période d'inactivité.

15. Le procédé selon la revendication 14, comprenant en outre :

le déclenchement d'une estimation de décalage de temps et de fréquence (1405) par l'émetteur-récepteur (501, 1501) après la période d'inactivité, d'une façon conditionnée par la durée de la période d'inactivité.

# FIG 1

# FIG 2

$\sim$200

One radio frame, $T_f = 307200 T_s = 10$ ms

One slot, $T_{slot} = 15360 T_s = 0.5$ ms

| $\sim$201 | $\sim$201 | $\sim$201 | $\sim$201 | | $\sim$201 | $\sim$201 |
|---|---|---|---|---|---|---|
| #0 | #1 | #2 | #3 | ............... | #18 | #19 |

One subframe

$\sim$202

EP 3 300 435 B1

FIG 3

# FIG 4

FIG 5

EP 3 300 435 B1

**FIG 6**

*600*

*601*

Received Power (dBm) — vertical axis: -30, -35, -40, -45, -50, -55, -60, -65, -70

T-R Separation (meters) — horizontal axis: 14 15 16 17 18 19 20 21 22 23 24 25 26 27 28

Fast fading

Path loss

Shadow fading

*604*

*603*

*606*

*605*

*602*

EP 3 300 435 B1

**FIG 7**

701

702

700

Signal strength [dBm]

Log-normal distribution w/standard deviation σ

Path loss

Distance btw. TX and RX in logarithmic scale

EP 3 300 435 B1

FIG 8A

FIG 8B

$$\varepsilon = \frac{Err_{est}}{\Delta R_{act}} = \frac{|R_{est} - R_{act}|}{|R_{act} - R|} \qquad R = 500 \ [m]$$

FIG 9A

FIG 9B

FIG 10

| FIG 10A | FIG 10B |
|---------|---------|

## FIG 10A

Output:
$\{\forall t_k \in \{t_0, t_1, t_2, ...\}:$
$(t_k, P_{MS},(t_k), f_{DoS}(t_k))\}$

( 1 )

**1001**

[Background Activities] MS measures the received power $P_{MS}$ (e.g., RSSI [dBm]) & estimates Doppler spread $f_{DoS}$ at the predefined time instancest, and save them in memory.

Save the outputs

( 2 )

**1002**

[Regression Window Reset Condition Check] MS checks the regression window reset condition by monitoring parameters, e.g., $\{f_{DoS}\}$ modem FSM, HD operation, etc.

[Memory::Regression Set]
$\{\forall t_k:(t_k, P_{MS}(t_k), f_{DoS}(t_k))\}$
$\cup\{\forall t_k:(t_k, d(t_k))\}$

Regression Preparation

( 3 )

RegWin Reset Condition Met?

Yes

**1003** Delete the saved data

Delete the saved data of Regression Set in memory

**1004** No

( 4 )

Do conversion of $\{\Delta f_{DoS}\} \rightarrow \{\Delta d\}$ & Calculate the MS's travel distance at t, wrt Tx by $d(t_K = \sum(\Delta d)$; Extend the Regression Set in memory

Extend the Regression Set w/$\{d(t_k)\}$

( 5 )

[Regression Execution Condition Check] MS checks the regression execution condition, e.g. timer alarm, imminent sleep event indication, etc.

Input: $\{\forall t_k:(t_k, f_{DoS}(t_k))\}$
Output: $\{\forall t_k:(t_k, d(t_k))\}$

**1005**

( 6 )

RegExec Condition Met?

No

Keep doing Regression Preparation

**1006**

Yes

# FIG 10B

1000

Input: $\{\forall t_k:(d(t_k), P_{MS}(t_k))\}$
Output: $(R_m, A, n, Q_{reg})$

**Regression Execution**

(7)

[Perform a linear regression] for each $R: \in \{R_1, R_2, ..., R_N\}$ on $\{(\log_{10}(R(t_k)), P_{MS}(t_k))\}$. where $R(t_k)=R+d(t_k)$; i.e., to find $A$, $n$, $Q_{reg}$ [per R]

of $P_{MS}:= A \cdot 10n^* \log_{10}(R(t))$;
[Output]
$\{\forall R_t \in R: (R_t, A, n, Q_{reg})\}$

Access the Regression Set

1007

Save the outputs

[Memory: Regression Result] $(R_m, A, n, Q_{reg})$

Access the Regression Result

(8)

Find $R_S$ which satisfies $R_m = \arg\max_{R_1 \in R} Q_{reg}(R_t)$.
Take the associated set as the regression result

1008

Input: $(R_m, A, n, Q_{reg})$.
$(\text{Gain}(t_S), t_S, t_W)$

Output: Gain $(t_W)$

**Sleep/ Wake-up Preparation**

(9)

Yes                    $Q_{reg}$ > Threshold?                    No

1010                    1009

(10)

Fetch the last $(t_2 R, f_{DoS}, P_{MS}, \text{Gain})$ prior to Sleep, where $t_2$ is the last time instance before going to Sleep

(13)

$\text{Gain}(t_W) = \text{Gain}((t_S)) - \Delta_{margin}(t_W - t_S)$

1013

(11)

Compute $R(t_W) = R(t_S) + \Delta d$; Find $P_{MS}(t_W)$ by extrapolation @$t_W$ where $t_W$ is the first time instance after wake-up

1011

(12)

$\text{Gain}(t_W) = \text{Gain}(P_{MS}(t_W)) - \Delta_{margin}(\sigma)$

1012

# FIG 11

Initial Gain Scheme Configuration — 1101

1102 — $t < T_1$? Yes → $Gain_{backoff} = 0 \ [dB]$ — 1104

No

1103 — $t < T_2$? Yes → $Gain_{backoff} = 3 \ [dB]$ — 1105

No

1106 — $Gain_{backoff} = 6 \ [dB]$ → 1107 — $Gain_{init}$ $Gain_{atest} - Gain_{backoff}$

Note: $0 \leq T_1 \leq T_2$, $0 \leq T_{freqTrk}$

Initial Time/Freq. Tracking Scheme Configuration — 1110

1100

1111 — $t < T_{freqTrk}$? Yes → 1112 Decide to use the latest time/freq. Offset values

No

1114 — Decide to use the IRX-assisted time/freq. Tracking

1115 — Decide to wake up FEFC/RFIC at SF(N-1); to use SF(N-1) for time/freq. Offset Est. @IRX

1113 — Decide to wake up FEFC/RFiC at SF(N),

1108 — Compile configuration of initial Gain & time/freq Tracking

End

EP 3 300 435 B1

**FIG 12**

elapsed time dependent backoff Gain

FIG 13

1300

1301

highway

6ms
6ms
20ms
20ms
40ms
40ms
80ms
80ms
160ms
160ms
320ms
320ms
640ms
640ms
1280ms
1280ms
2560ms
2560ms

1302

EP 3 300 435 B1

FIG 14

FIG 15

**FIG 16**

1600

1601

Determine a length of a period of inactivity of a
transceiver

1602

At least one of set a gain of the transceiver when it starts
receiving data after the period of inactivity and switch on
a time and frequency offset estimation by the transceiver
after the period of inactivity based on the length of the
period of inactivity

**EP 3 300 435 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160007292 A1